# FASCICULE DE BREVET EUROPEEN

(11) **EP 0 412 197 B1**
(45) Date de publication et mention de la délivrance du brevet: **21.09.1994**
(21) Numéro de dépôt: 89114888.4
(22) Date de dépôt: 11.08.1989
(51) Int. Cl.: G01K 7/12, G01K 7/02

(54) **Bloc individuel de jonction pour la compensation de soudure froide d'un couple thermoélectrique**
Individueller Verbindungsblock zur Kompensation der kalten Lötstelle eines Thermoelementes
Individual connection block for the compensation of the cold junction of a thermoelectric couple

(43) Date de publication de la demande: 13.02.1991
(73) Titulaire: Société Anonyme dite: CEGELEC, F-92309 Levallois-Perret (FR)
(72) Inventeur: Gelin, Claude, F-94000 Creteil (FR)
(74) Mandataire: Weinmiller, Jürgen

(56) Documents cités:
- EP-A- 0 115 214
- FR-A- 2 632 777
- US-A- 1 745 149
- US-A- 3 911 745
- US-A- 4 483 632
- US-A- 4 623 266
- PATENT ABSTRACTS OF JAPAN, vol. 12, no. 53 (P-668)[2900], 18 février 1988 ; & JP-A-62 200 236

## Description

L'invention concerne un dispositif de compensation de soudure froide pour un couple thermoélectrique selon le préambule de la revendication 1. Un tel dispositif est connu à partir du document EP-A-0 115 214.

La mise en oeuvre de couples thermoélectriques pour la mesure de températures en milieu industriel est classique. A cet effet, on place une extrémité d'un couple thermoélectrique dans le milieu dont on veut mesurer la température, alors qu'une autre extrémité de ce couple thermoélectrique est soumise à une température de référence qui doit être connue avec précision si l'on veut obtenir des mesures exploitables.

On mesure la force électromotrice qui est produite par effet SEEBECK entre les conducteurs différents et interconnectés du couple, lorsque la température à mesurer et la température de référence sont différentes. Une évaluation de la force électromotrice et la connaissance de la nature des conducteurs du couple thermoélectrique permettent conjointement de déterminer la valeur de la température à mesurer.

Les caractéristiques des divers couples thermoélectriques sont généralement établies en prenant la température de 0°C comme température de référence ; il faudrait donc disposer dans un milieu à cette température l'extrémité des thermocouples qui est destinée à servir de base de référence et que l'on désigne souvent sous l'appelation "soudure froide" par référence à sa température et à un mode usuel d'interconnexion des conducteurs.

Toutefois on préfère souvent éviter d'utiliser des soudures froides maintenues à une température de 0°C en milieu industriel. On se contente alors de regrouper ces soudures froides dans des enceintes thermostatées et de prendre en compte les différences de force électromotrice dues à la différence entre la température d'une enceinte thermostatée et 0°C, lors des lectures des mesures effectuées pour les thermocouples;

Dans une forme de réalisation usuelle, on prend en compte la température d'une enceinte thermostatée et ses éventuelles variations par l'intermédiaire d'une sonde thermostatique placée dans l'enceinte et agissant directement sur la chaîne de mesure recevant les forces électromotrices des différents thermocouples dont les soudures froides sont logées dans l'enceinte.

Toutefois l'installation d'enceintes thermostatées parmi les cartes de circuits dans des installations souvent très diverses est souvent incommode. En effet les circuits électroniques, y compris les chaînes de mesure, sont agencés et associés de manière homogène, par exemple sur des cartes porteuses de composants qui sont de dimensions normalisées et qui viennent s'enficher par l'intermédiaire de connecteurs standards sur des fonds de panier standards dans des bâtis ou armoires eux mêmes standardisés.

Le dispositif tel que défini par la revendication 1 s'adapte mieux à un tel environnement.

L'invention sera précisée dans la description qui suit en liaison avec les figures évoquées ci-dessous.

La figure 1 présente schématiquement une chaîne de mesure associant un dispositif selon l'invention à un couple thermoélectrique, en amont d'une chaîne de mesure, pour assurer la compensation de soudure froide de ce couple thermoélectrique.

La figure 2 présente un exemple d'un dispositif selon l'invention monté dans un bloc individuel de jonction pour compensation de soudure froide, et enfiché sur un connecteur multipoint.

La figure 3 présente une vue éclatée partiellement coupée d'un bloc individuel de jonction pour compensation de soudure froide selon la figure 2.

Les figures 4, 5, 6 présentent respectivement une coupe transversale, une vue de dessus et une vue de dessous du bloc présenté figure 2.

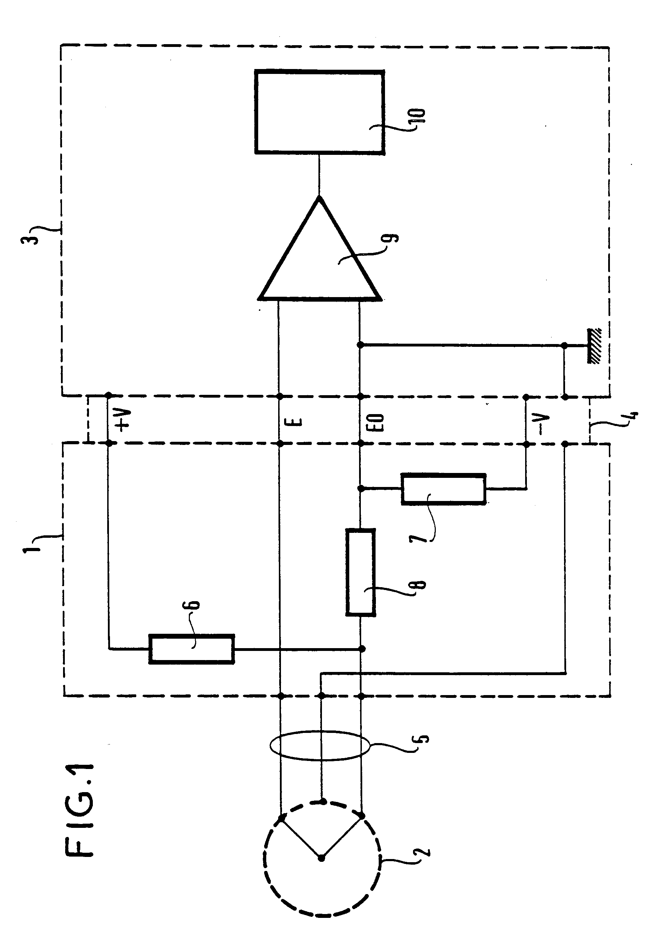

Le bloc de jonction individuel 1 dont le schéma électrique est présenté figure 1 est destiné à assurer une compensation de soudure froide pour un thermocouple dont la soudure chaude 2 est située dans un milieu dont on veut mesurer la température alors que sa soudure froide est à la température du milieu où sont situés le bloc de jonction individuel 1 et une chaîne de mesure analogique 3 portée par une carte de circuit, non représentée sur la figure 1.

Dans une forme préférée de réalisation qui sera précisée plus loin, le bloc de jonction individuel 1 vient se monter directement sur la carte portant la chaîne de mesure 3 grâce à un connecteur multipoint 4 usuel. La soudure chaude 2 est reliée au bloc de jonction individuel par un câble de compensation 5 comportant deux conducteurs identiques de liaison souvent protégés par une tresse métallique reliée au potentiel de masse, ici au niveau de la carte portant la chaîne de mesure 3.

Le bloc de jonction individuel 1 est enfermé dans un petit boîtier qui sera précisé plus loin et qui contient un microcircuit destiné à compenser les variations de signal délivré par le couple thermoélectrique lorsque varie la température de la soudure froide de ce couple qui est celle du milieu où se trouve le bloc de jonction individuel 1 et la carte portant ce bloc 1 et comportant la chaîne de mesure 3.

Ce microcircuit comprend une source de courant constitué à partir d'un pont diviseur à résistances 6, 7 en série entre les bornes +V et -V d'une source de tension continue. Une résistance 8 choisie pour sa sensibilité à la température est insérée en série dans la boucle fermée du couple thermoélectrique et entre les résistances 6, 7 de manière à ajouter une tension de compensation, fonction de la température ambiante où elle se trouve, à la force électromotrice produite par le couple thermoélectrique.

Dans la forme de réalisation envisagée, les conducteurs de liaison du câble de compensation 5 qui sont reliés à la soudure chaude 2 du thermocouple sont aussi reliés l'un, via la résistance 8, à l'entrée E0 mise à la masse d'un amplificateur de mesure 9, et l'autre à la seconde entrée E de l'amplificateur de mesure 9.

L'amplificateur de mesure 9 attaque classiquement un convertisseur analogique-numérique 10 situé en amont des circuits non figurés d'exploitation de la chaîne de mesure 3.

La résistance 8 est préférablement constituée par une sonde platine choisie pour engendrer une tension correspondant à la différence entre la force électromotrice réellement engendrée par le couple thermoélectrique et celle qu'il aurait du produire si sa soudure froide était à 0°C. La résistance 7 est connectée entre la borne de potentiel -V et l'entrée E0 de l'amplificateur 9 à laquelle est reliée l'une des deux bornes de la résistance 8 ; la résistance 6 est connectée entre la borne de potentiel -V et la seconde borne de la résistance 8. Les bornes de potentiel +V et -V sont celles d'une source continue à tension constante que porte la carte de circuit où se trouve la chaîne de mesure 3.

Les résistances 6, 7 sont des résistances de précision réalisées en technologie couche mince, sous la forme de composants destinés à être montés en surface CMS, pour obtenir les performances nécessaires à la compensation.

Ces composants CMS sont ici soudés sur les pistes conductrices d'un support imprimé en verre époxy pour microcircuit préalablement revêtu d'une épaisseur d'alliage étain-plomb supérieure à 30 microns et servant d'apport de soudure pour permettre une bonne brasure.

Lors du soudage, on utilise préférablement une machine à souder à tête mobile asservie comportant un dispositif de préhension par le vide des composants à monter en surface à partir d'une bande ou d'un magasin d'alimentation en composants. Le positionnement d'un composant sur le support de microcircuit est effectué par la tête mobile asservie de placement-soudage et les électrodes viennent se placer de part et d'autre du composant CMS sur les plages de soudage préalablement réalisées sur le microcircuit à cet effet. Le soudage d'un composant CMS s'effectue par capillarité sans échauffement important de ce dernier en raison d'une part du refroidissement créé par aspiration d'air par le dispositif de préhension et d'autre part de la conduction thermique s'établissant via la structure de ce dispositif de préhension.

L'énergie thermique nécessaire au soudage est déterminée avec précision pour éviter toute surchauffe inutile lors du soudage, elle est modulée par réglage de la durée et/ou de l'intensité du courant de chauffage et/ou de la pression des électrodes sur les plages de soudage préalablement étamées.

Bien entendu les résistances 6, 7, 8 doivent être choisies en fonction de la nature des deux conducteurs constituant les différents couples thermoélectriques possibles, par contre la structure des blocs de jonction individuels pour la compensation de soudure froide est susceptible d'être standardisée de manière à permettre un montage aisé de ces blocs sur des cartes de circuit.

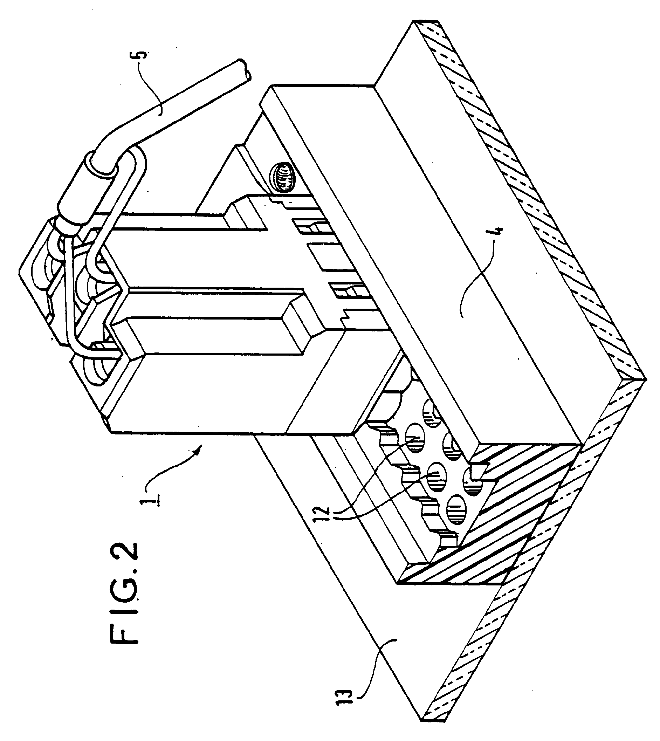

A cet effet le bloc de jonction individuel 1 présenté sur les figures 2 à 6 est conçu pour venir s'enficher sur un connecteur multipoint 4 classique susceptible notamment d'être monté sur une carte ou un support plat 13, tel un connecteur de type JR4 de la société ENTRELEC.

Le bloc 1 comporte à cet effet des fiches de connexion, non visibles sur la figure 2, qui viennent s'insérer dans des pièces de connexion individuelles contenues dans le connecteur multipoint et accessibles séparément au travers des orifices 12. Les pièces de connexion du connecteur multipoint 4 viennent se raccorder aux pistes conductrices du support 13, de manière connue en soi, par l'intermédiaire de picots de connexion, non représentés. Ces pièces de connexion peuvent aussi être conformées de manière à venir en contact avec les pistes conductrices d'une carte de circuit non figurée qui vient s'enficher dans l'extrémité conformée à cet effet du connecteur multipoint, celui-ci traversant alors le support 13.

Dans l'exemple de réalisation présenté les conducteurs de liaison et un fil de mise à la masse de tresse du câble de compensation 5 pour couple thermoélectrique viennent se connecter au sommet du bloc de jonction individuel 1.

Les figures 2 à 6 montrent un exemple de réalisation d'un tel bloc qui est composé d'une embase 14 en un matériau isolant moulé muni à sa partie supérieure d'un emplacement 15 support de microcircuit. Des conduits ménagés à travers l'embase permettent le passage de fiches de connexion 16 destinées à être enfichées dans des pièces de connexion femelle correspondantes du connecteur multipoint 4. Ces fiches de connexion 16 sont logées dans des colonnes isolantes 17 de l'embase qui viennent positionner cette dernière de manière précise sur le connecteur multipoint. Au moins certaines des colonnes 17 sont dotées de renflements annulaires 18 permettant un verrouillage mécanique de l'embase sur un connecteur par coopération de ces renflements 18 avec des rainures annulaires correspondantes du connecteur multipoint. Un profil 19′ de l'embase est destiné à coopérer avec une des formes complémentaires dont est doté le connecteur multipoint pour assurer un détrompage interdisant tout montage du bloc de jonction individuel en une position non prévue pour lui sur le connecteur.

Les fiches de connexion 16 sont classiquement immobilisées dans l'embase 14 qui est par exemple surmoulée sur elles, elles viennent s'enficher dans des trous de connexion du microcircuit 19 permettant d'interconnecter ce dernier avec la chaîne de mesure 3.

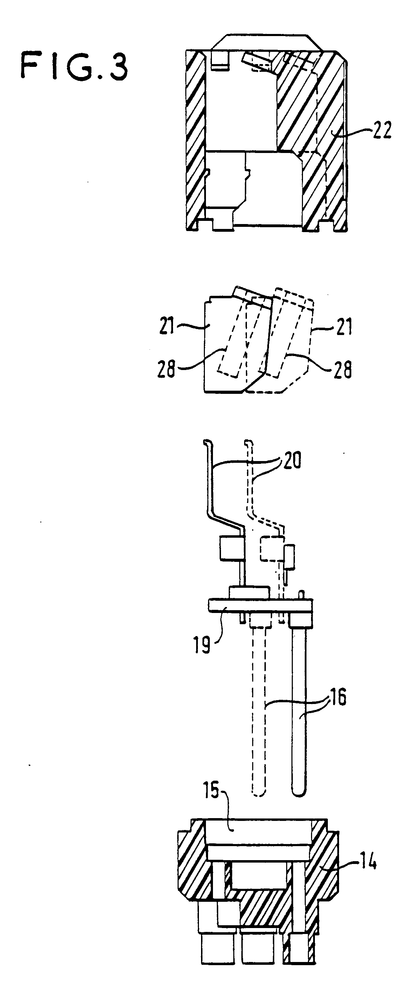

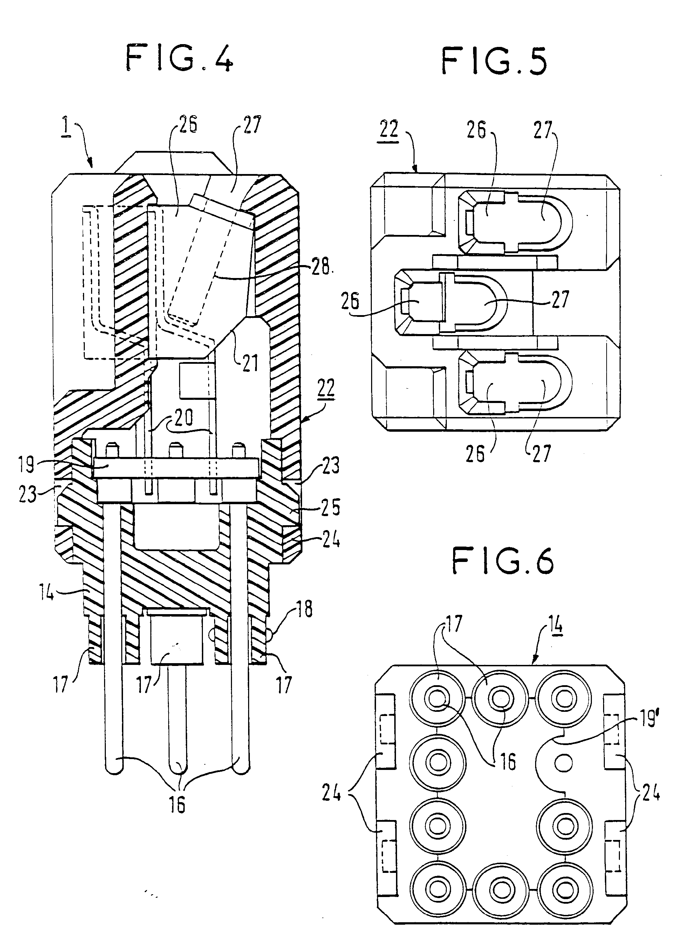

Trois tiges de connexion 20 -dont seules deux sont visibles sur les figures 3 et 4-, permettent de relier le microcircuit 19 au travers duquel elles sont enfichées, avec les conducteurs de liaison et avec le fil de mise à la masse de tresse d'un câble de compensation 5.

Ces tiges de connexion 20 sont plaquées contre la paroi interne de trois bornes de connexion électrique 21, du type à raccordement axial, dans lesquelles on vient immobiliser individuellement le fil de mise à la masse de tresse et les conducteurs de liaison du câble de compensation. Un exemple de ce type de borne est notamment décrit dans le brevet français 2 520 561 de la demanderesse.

Ces bornes sont immobilisées dans un capot 22 en matériau isolant qui vient coiffer l'embase 14 au dessus du microcircuit 19. Le capot comporte ici des pattes 24 dotées qui s'encliquètent élastiquement par des creux 23 sur des cliquets 25 ménagés latéralement en bordure d'embase.

Les bornes de connexion 21 ont leurs entrées d'introduction de fil 26 qui débouchent à la partie supérieure du capot 22 du bloc individuel de jonction 1 assemblé. De même des entrées d'introduction 27 de lame de tournevis sont ménagées à proximité des embouchures d'introduction de fils dans le capot 22 pour donner accès aux têtes des vis de manoeuvre, telle 28, des bornes de connexion 21.

Le volume ménagé autour du microcircuit 19 à l'intérieur de l'embase 14 et du capot 22 forme une enceinte fermée de régulation thermique.

Selon une forme de réalisation la résistance 8, servant de sonde de température à l'intérieur du bloc individuel de jonction 1, est fixée par collage sur une des tiges de connexion 20 au lieu d'être sur le microcircuit 19 ce qui permet de mieux prendre en compte la température extérieure et la masse thermique représentée par les fils raccordés.

Comme indiqué la mise en oeuvre de tels blocs de jonction peut s'effectuer directement sur des connecteurs su niveau des cartes portant les circuits logiques de mesure associés et ce par simple enfichage, chaque bloc étant par exemple repéré en liaison avec le couple thermoélectrique qu'il dessert par exemple par un étiquetage coloré normalisé correspondant à la nature des conducteurs dudit couple.

## Revendications

1. Dispositif de compensation de la température de soudure froide d'un couple thermoélectrique comportant dans un bloc individuel un composant (8) sensible à la température du milieu ambiant, inséré en sortie du câble de compensation (5) reliant dans ledit couple thermoélectrique la soudure chaude (2) à la soudure froide, au niveau de cette dernière, pour ajouter à la force électromotrice produite par le couple thermoélectrique une tension de correction fonction de la différence entre la température ambiante et 0°C, caractérisé en ce que ledit composant est constitué par une résistance au platine (8) et fait partie d'un microcircuit (19), en ce que ce microcircuit est par ailleurs composé d'un pont d'alimentation à deux résistances (6, 7), du type composant monté en surface, qui sont insérés en série entre les bornes (+V, -V) d'une source de courant, la résistance au platine (8) étant insérée entre les résistances (5, 6) du pont, en série avec le couple thermoélectrique, et en ce que ledit microcircuit est interconnecté avec une carte de circuit portant la chaîne de mesure (3) associée au couple thermoélectrique, par un connecteur multipoint (4) où ledit bloc vient s'enficher.

2. Dispositif selon la revendication 1, caractérisé en ce qu'il comporte une embase (14) en matériau isolant dans laquelle est prévu un emplacement (15) support de microcircuit et des conduits pour des fiches de connexion (16) destinées à être enfichées dans un connecteur multipoint pour la connexion du microcircuit, lesdites fiches de connexion venant s'implanter dans des trous de connexion du microcircuit, un capot (22) en matériau isolant venant coiffer l'embase et contenant des bornes de connexion (21) accessibles de l'extérieur pour les fils du câble de compensation, ainsi que des tiges de connexion (20) reliant les bornes de connexion au microcircuit dans des trous de connexion duquel elles sont enfichées, l'embase et le capot formant une enceinte fermée de régulation thermique.

3. Dispositif selon la revendication 1, caractérisé en ce que la connexion des résistances (6, 7) du pont d'alimentation aux pistes conductrices du support de microcircuit (19) est obtenue par soudage par capillarité sur les plages étamées de soudage de ce support, ces plages étant chauffées par les électrodes de soudage plaquées contre elles alors que le corps d'une résistance à souder est maintenue à faible température par conduction thermique au travers de la masse du dispositif de préhension ayant servi à son positionnement et par l'aspiration d'air que produit ce dispositif en fonctionnant.

## Patentansprüche

1. Vorrichtung zur Kompensation der Temperatur der kalten Lötstelle eines Thermoelements mit einem auf die Temperatur des umgebenden Milieus in einem individuellen Block ansprechenden Bauelement (8), das am Ausgang des im Thermoelement die heiße Lötstelle (2) mit der kalten Lötstelle in Höhe dieser letzteren verbindende Kompensationskabels (5) eingefügt ist, um der vom Thermoelement erzeugten elektromotorischen Kraft eine Korrekturspannung in Abhängigkeit von der Differenz zwischen der Umgebungstemperatur und der Temperatur von 0°C hinzuzufügen, dadurch gekennzeichnet, daß das Bauelement aus einem Platinwiderstand (8) besteht und Bestandteil eines Mikroschaltkreises (19) ist, daß dieser Mikroschaltkreis außerdem eine aus zwei Widerständen (6, 7) gebildete Speisebrücke von der Art eines auf der Oberfläche montierbaren Bauelements besitzt, wobei diese Widerstände in Reihe zwischen die Klemmen (+V, -V) einer Stromquelle eingefügt sind und der Platinwiderstand (8) zwischen die Widerstände (5, 6) der Brücke in Reihe mit dem Thermoelement eingefügt ist, und daß der Mikroschaltkreis über einen Vielfachsteckverbinder (4), in den der Block eingesteckt wird, mit einer die dem Thermoelement zugeordnete Meßkette (3) tragenden Druckschaltungskarte verbunden ist.

2. Vorrichtung nach Anspruch 1, dadurch gekennzeichnet, daß sie eine Basis (14) aus Isoliermaterial enthält, in der eine Stelle (15) zur Aufnahme des Mikroschaltkreises und Löcher für Verbindungssteckerstifte (16) vorgesehen sind, die in einen Vielfachsteckverbinder zum Anschluß des Mikroschaltkreises eingesteckt werden können, wobei diese Verbindungssteckerstifte in Anschlußlöcher des Mikroschaltkreises eindringen und wobei eine Haube (22) aus isolierendem Material über die Basis gestülpt ist und von außen für die Drähte des Kompensationskabels zugängliche Anschlußklemmen (21) sowie Anschlußstifte (20) enthält, die die Anschlußklemmen mit dem Mikroschaltkreis verbinden, in dessen Anschlußlöcher sie eingesteckt sind, wobei die Basis und die Haube einen geschlossenen Wärmeregelungsraum bilden.

3. Vorrichtung nach Anspruch 1, dadurch gekennzeichnet, daß der Anschluß der Widerstände (6, 7) der Speisebrücke an die Leitbahnen des Trägers des Mikroschaltkreises (19) durch kapillare Lötwirkung auf mit Lötmetall versehene Bereiche dieses Trägers erhalten wird, wobei diese Bereiche durch die an sie angelegten Lötelektroden erwärmt werden, während der Körper eines anzulötenden Widerstands auf niedriger Temperatur aufgrund der Wärmeleitung durch die Masse der Haltevorrichtung gehalten wird, die zur Positionierung gedient hat, und durch die Saugwirkung der Luft, die diese Vorrichtung im Betrieb erzeugt.

## Claims

1. Thermocouple cold junction temperature compensator device comprising in an individual terminal block at the cold junction a component (8) responsive to the temperature of the environment at the output end of a compensated cable (5) connecting the hot junction (2) to the cold junction of said thermocouple in order to add to the electromotive force produced by the thermocouple a correction voltage conditioned by the difference between the ambient temperature and 0°C, characterised in that said component is a platinum resistor (8) and is part of a microcircuit (19), in that said microcircuit further comprises a supply bridge with two surface mount resistors (6, 7) connected in series between the terminals (+V, -V) of a current supply, the platinum resistor (8) being inserted between the resistors (5, 6) of the bridge in series with the thermocouple, and in that said microcircuit is interconnected with a circuit board carrying the measuring system (3) associated with the thermocouple by a multipin connector (4) into which said terminal block plugs.

2. Device according to claim 1 characterised in that it comprises an insulative material socket (14) in which are provided a microcircuit support location (15) and passages for connecting plugs (16) adapted to be plugged into a multipin connector to connect the microcircuit, said plugs being installed in connection holes of the microcircuit, an insulative material cap (22) covering the socket and containing connection terminals (21) accessible from the outside for the wires of the compensated cable and connecting rods (20) connecting the connecting terminals to the microcircuit in connection holes of which they are plugged, the socket and the cap forming a closed heat control enclosure.

3. Device according to claim 1 characterised in that the resistors (6, 7) of the supply bridge are connected to the conductive tracks of the microcircuit support (19) by soldering two tinned solder lands of said support relying on capillary action, said lands being heated by soldering electrodes applied to them while the body of a resistor to be soldered is kept at a low temperature by thermal conduction through the mass of the handling device by which it is placed in position and by aspiration of air caused by said device in operation.
